# EUROPÄISCHE PATENTSCHRIFT

(11) **EP 0 825 815 B1**
(45) Veröffentlichungstag und Bekanntmachung des Hinweises auf die Patenterteilung: **28.07.1999**
(21) Anmeldenummer: 96916047.2
(22) Anmeldetag: 13.05.1996
(51) Int. Cl.: A23F 5/32

(54) **VERFAHREN ZUM GEFRIERTROCKNEN VON KAFFEE-EXTRAKT**
PROCESS FOR FREEZE DRYING COFFEE EXTRACT
PROCEDE DE LYOPHILISATION D'EXTRAIT DE CAFE

(30) Priorität: 16.05.1995 DE 19519129; 04.03.1996 DE 19609377
(43) Veröffentlichungstag der Anmeldung: 04.03.1998
(73) Patentinhaber: Dr. Otto Suwelack Nachf. GmbH & Co., 48727 Billerbeck (DE)
(72) Erfinder: SUWELACK, Wolfgang, D-48727 Billerbeck (DE); KUNKE, Dorothee, D-48727 Billerbeck (DE)
(74) Vertreter: UEXKÜLL & STOLBERG
(86) Internationale Anmeldenummer: EP9602030
(87) Internationale Veröffentlichungsnummer: WO9636241

(56) Entgegenhaltungen:
- DE-A- 1 692 269
- DE-A- 1 778 216
- DE-A- 1 906 924
- DE-A- 2 038 083
- DE-A- 2 150 037
- US-A- 2 751 687
- US-A- 3 573 060
- US-A- 3 635 727

## Beschreibung

Die Erfindung betrifft ein Verfahren zum Gefriertrocknen von Kaffee-Extrakt, welches gegenüber den bisher bekannten Verfahren energie- und zeitsparend ist. Die Erfindung betrifft ferner den so erhältlichen gefriergetrockneten Kaffee-Extrakt in Pellet-Form.

Gefriergetrockneter Kaffee-Extrakt zur Verwendung als "Instant-Kaffee" wird üblicherweise als Granulat hergestellt, indem man wässrigen Kaffee-Extrakt mit einem Trockenstoffgehalt von etwa 40 Gew./Vol.% bis zu einem Schaumgewicht von etwa 450 bis 750 g/l aufschäumt, die Masse etwa 30 Minuten lang auf Gefrierbändern bis zu einer Schaumtemperatur von etwa -45°C abkühlt und das gefrorene Produkt bei -40 bis -50°C mahlt (vgl. DE-OS 1 692 269). Das so erhaltene Granulat wird bei tiefen Temperaturen gesiebt, um den Feinanteil mit Korngrößen von weniger als 0,5 mm und Partikel mit Korngrößen über 3 mm zu eliminieren (vgl. DE-OS 2 150 037). Die Menge des Feinanteils, d.h. der Partikel mit Korngrößen unter 0,5 mm, macht üblicherweise 30 bis 35 Gew.% des eingefrorenen Gesamtproduktes aus. Nach dem Sieben weisen etwa 95% des Granulats Korngrößen im Bereich von 0,5 und 3 mm auf, häufig ist jedoch noch immer bis zu 5% Feinanteil mit Korngrößen von 0,5 mm oder weniger vorhanden. Der Anteil der Partikel zwischen 0,5 mm und 1 mm beträgt etwa 10 bis 20% des gesiebten Produktes. Dieses Granulat wird üblicherweise in Schalen gefüllt und bei Betriebsdrücken zwischen 0,3 und 0,4 mbar (Capacitron-Werte, entsprechend Thermotron-Werten von etwa 0,4 bis 0,6 mbar) gefriergetrocknet (vgl DE-OS 2 150 037). Das gefriergetrocknete Endprodukt weist gewöhnlich eine Dichte von etwa 230 bis 260 g/l auf.

Die herkömmlichen Verfahren zum Herstellen von gefriergetrocknetem Kaffee-Extrakt haben jedoch wesentliche Nachteile.
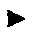 Wie oben erläutert, entstehen 30 bis 35% des Granulats als Feinanteil, der durch Sieben eliminiert, zurückgeführt und wieder verarbeitet werden muß.
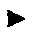 Das Verfahren ist kostenintensiv, da der Energieaufwand des Mahlens bei tiefen Temperaturen zwischen etwa -40 und -50°C sowie die Kosten für die Sieb- und Mahlstrecke wesentlich zu den Gesamtherstellungskosten beitragen.
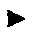 Mit Rücksicht auf den immer noch vorhandenen Feinanteil und die unterschiedliche Granulatgröße wird das Produkt bei niedrigen Drücken (etwa 0,3 bis 0,4 mbar) getrocknet. Die niedrigen Trocknungs-Drücke führen jedoch zu verhältnismäßig langen Trocknungszeiten und relativ tiefen Eistemperaturen, wobei Betriebsdrücke von 0,3 bis 0,4 mbar Temperaturen des Produktes an der Sublimationsfront von -27,0 bis -25,5°C entsprechen (diese Eistemperaturen lassen sich ohne Thermoelemente mit Hilfe der barometrischen Temperaturmessung (BTM) sehr genau ermitteln, siehe z.B. H.M. Willemer, PDA Symposion, Tokio, November 14 - 16, 1994, Seite 296). Auch in dieser Verfahrensstufe ist die Herstellung von gefriergetrocknetem Kaffee-Granulat gemäß Stand der Technik außerordentlich kosten- und energie-intensiv.

Aufgabe der Erfindung war es daher, ein Verfahren zur Herstellung von gefriergetrocknetem Kaffee-Extrakt zu finden, mit Hilfe dessen die oben zitierten Nachteile vermieden werden können, welches jedoch ein Produkt liefert, das höchsten Qualitätsanforderungen entspricht.

Die Aufgabe wurde durch das erfindungsgemäße Verfahren gelöst, bei dem man
a) Kaffee-Extrakt mit einem Trockenstoffgehalt von 35 bis 45 Gew./Vol% bis zu einem Schaumgewicht von 450 bis 750 g/l, vorzugsweise 500 bis 700 g/l, aufschäumt,
b) den aufgeschäumten Kaffee-Extrakt zur Bildung von Pellets auf ein gekühltes Band tropft und die Pellets auf dem Band auf Temperaturen unterhalb -30°C einfriert, und
c) die eingefrorenen Pellets bei Drücken im Bereich von 0,8 bis 1,5 mbar trocknet.

Bei dem erfindungsgemäßen Verfahren beträgt die Schaumtemperatur am Ende des Aufschäumvorganges vorzugsweise -2 bis -4°C.

Der Aufschäum-Vorgang kann nach Standardverfahren erfolgen; vorzugsweise wird als Gas Stickstoff oder Kohlendioxid verwendet.

Wesentliche Vorteile des erfindungsgemäßen Verfahrens zeigen sich in Stufe b). Dort können die auf das gekühlte Band getropften Pellets innerhalb von 2 bis 3 Minuten auf Temperaturen zwischen -30 und -40°C eingefroren werden. Gegenüber herkömmlichen Verfahren wird somit in dieser Stufe ein Zeitgewinn um etwa einen Faktor 10 erzielt. Da das Produkt nicht zerkleinert (gemahlen) werden muß, und daher keine Reibungswärme erzeugt wird, ist es ausreichend, die Pellets bei -30 bis -40°C einzufrieren.

Auch in dieser Stufe wird somit Energie eingespart.

Vorzugsweise werden in Stufe b) Tropfen einer solchen Größe auf das gekühlte Band gegeben, daß nach dem Gefrieren Pellets mit einem Durchmesser von 4 bis 7 mm, vorzugsweise etwa 6 mm und einer Höhe von 2,5 bis 3,5 mm, vorzugsweise 3 mm erhalten werden. Gegebenenfalls können die Pellets in gefrorenem Zustand gesiebt werden, um "Fehlgrößen" zu eliminieren.

Die anschließende Gefriertrocknung der gefrorenen Pellets erfolgt bei Drücken, welche um den Faktor 2 bis 4 oberhalb derjenigen Drücke liegt, die üblicherweise zum Gefriertrocknen von gemahlenem Kaffee-Granulat angewendet werden. Wie oben erläutert, liegen diese Drücke gewöhnlich zwischen 0,3 und 0,4 mbar (ausgedrückt als Capacitron-Werte). Demgegenüber werden erfindungsgemäß Drücke zwischen 0,8 und 1,5 mbar, vorzugsweise 0,9 bis 1,3 mbar, angewendet. Rechnet man aus diesen Betriebsdrücken auf die Eistemperatur im Pellet um (siehe oben), so ergeben sich Eistemperaturen zwischen -19 und -16°C. Es kann somit auch in dieser Stufe Energie eingespart werden. Ferner verbessert der höhere Betriebsdruck die Wärmezufuhr von der Heizplatte zum Produkt auf das 1,6-Fache (vgl. Ehlers, H., "Bestimmung der optimalen Trocknungsbedingungen für die Gefriertrocknung von Gütern durch Messung der Wärme- und Strömungsleitwerte", 5. Gefriertrocknungstagung, Leibold AG, Köln 1962).

Zusätzlich nimmt bei Drücken zwischen 0,8 und 1,5 mbar das zu transportierende Dampfvolumen auf etwa 1/4 ab, was bei gleicher Strömungsgeschwindigkeit die vierfache Wasserdampfmenge pro Zeit- und Flächeneinheit bedeutet. Das erfindungsgemäße Verfahren führt also auch zu einer meßbaren Erhöhung der Trocknungsleistung bei gleichzeitig geringerem Energiebedarf.

Die Drücke zwischen 0,8 und 1,5 mbar können während der gesamten Trocknungszeit oder während einer Phase von 10-50% der Trocknungszeit, also etwa für 0,5 bis 2,0 Stunden, zum Einsatz kommen.

Gemäß einer besonders bevorzugten Ausführungsform werden die hohen Drücke 0,8 bis 1,5 mbar nur während der ersten 0,5 bis 1,5 Stunden nach Beginn der Trocknung angewendet. Dieser Zeitraum reicht aus, um die oberste Schicht der Pellets zu trocknen und ihnen eine verhältnismäßig stabile, bräunliche Hülle zu geben. Während der verbleibenden Trocknungszeit können niedrigere Drücke, vorzugsweise im Bereich von 0,3 bis 0,4 mbar zur Anwendung kommen. Diese Ausführungsform führt zu dem weiteren Vorteil, daß das Schüttgewicht bei verkürzter Anwendung des hohen Druckes weniger stark erhöht wird als bei Anwendung der erhöhten Drücke während der gesamten Trocknungszeit.

Gemäß einer weiteren bevorzugten Ausführungsform der Erfindung wird die Trocknung in Stufe c) durchgeführt, bis die Pellets eine Dichte von 150 bis 300 g/l erreicht haben.

Erfindungsgemäß hat es sich überraschenderweise gezeigt, daß die Umkehr des bei der Gefriertrocknung von Kaffee-Extrakt anerkannten Prinzips der Kombination langsamer Einfrierzeiten mit niedrigen Trocknungsdrücken zu außerordentlich erfolgreichen Ergebnissen führt, wenn man den Kaffee-Extrakt in Pelletform einfriert. Kaffee-Extrakt in Pelletform kann in einem Zehntel der üblichen Zeit, nämlich in 2 bis 3 Minuten, eingefroren und bei 2- bis 4-fach höheren Drücken getrocknet werden als dies mit Granulat möglich ist, und es wird überraschenderweise ein Produkt mit attraktivem Äußeren erhalten.

Das Produkt gewinnt an Lagerstabilität, da der Luftsauerstoff geringere Angriffsmöglichkeiten hat. Zudem erhält die Oberfläche ein Aussehen, welches an frische geröstete Kaffeebohnen erinnert. Sofern die Gefriertrocknung vollständig bei Drücken unterhalb von ca. 0,8 mbar durchgeführt wird, geht u.a. dieser Farbeffekt ganz oder teilweise verloren, d.h. die Pellets erhalten ein helles bzw. scheckiges Aussehen.

Vorzugsweise weisen die nach erfindungsgemäßen Verfahren hergestellten Kaffee-Pellets Abmessungen auf, die bezüglich ihres Durchmessers zwischen 4 und 7 mm, vorzugweise 6 mm und bezüglich ihrer Höhe zwischen 2,5 und 3,5 mm, vorzugsweise 3 mm liegen. Soll ein gefriergetrocknetes Kaffeeprodukt mit Pellets von im wesentlichen gleicher Größe hergestellt werden, so lassen sich gefrorene Pellets mit Größen, die durch Betriebsschwankungen deutlich von der Sollgröße abweichen, ohne weiteres durch Sieben entfernen.

Die Vorteile des erfindungsgemäßen Verfahrens werden nachstehend anhand eines Vergleiches mit der herkömmlichen Herstellung von gefriergetrocknetem Kaffee-Extrakt in Granulatform verglichen, wobei jeweils drei verschiedene Kaffeesorten verwendet wurden, die sich hinsichtlich ihrer Qualität voneinander unterschieden. Die Kaffeesorte A wies die niedrigste und die Kaffeesorte C die höchste Aroma-Qualität auf.

**Tabelle 1**

| Kaffeesorte A | | |
|---|---|---|
| Parameter | Granulat | Pellets |
| Extrakt - Festst.Gehalt | 41,0 Gew./Vol% | 41,0 Gew./Vol.% |
| | ± 1 Gew./Vol.% | ± 1 Gew./Vol.% |
| Extrakt-Temperatur | + 15°C | + 15°C |
| Schaum-Dichte | ca. 780 g/l | ca. 550 g/l |
| Schaum-Temperatur | -4,8 bis -5,1°C | ca. -3°C |
| Einfrier-Zeit | 25 - 30 min. | ca. 2 min. |
| Einfrier-Temperatur | auf -45°C | auf -30 bis -40°C |
| Mahl-Temperatur | -40 bis -50°C | entfällt |
| Feinanteil | 25 bis 30% | nicht meßbar |
| Siebanalyse | 2-3 mm 30-55% | |
| | 1-2 mm 25-30% | 3 x 6 mm |
| | 0,5-1 mm 10-20% | |
| | <0,5mm 0- 5% | |
| Trocknungs-Druck | 0,4 mbar | 1,3 mbar |
| Trocknungs-Zeit | 6,4 h | ca. 4 h |

**Tabelle 2**

| Kaffeesorte B | | |
|---|---|---|
| Parameter | Granulat | Pellets |
| Extrakt - Festst.Gehalt | 42,0 Gew./Vol% | 42,0 |
| | ± 1 Gew./Vol.% | Gew./Vol.% ± 1 |
| | | Gew./Vol.% |
| Extrakt-Temperatur | + 10°C | + 10°C |
| Schaum-Dichte | ca. 800 g/l | ca. 500 g/l |
| Schaum-Temperatur | ca. -6°C | ca. -3,5°C |
| Einfrier-Zeit | 25 bis 30 min. | ca. 2 min. |
| Einfrier-Temperatur | auf -45°C | auf -30 bis -40°C |
| Mahl-Temperatur | -40 bis -50°C | entfällt |
| Feinanteil | 25 bis 30% | nicht meßbar |
| Siebanalyse | 2,5-3 mm 0- 1% | |
| | | 3 x 6 mm |
| | 1,6-2,5 mm 30-40% | |
| | 0,5-1,0 mm 10-25% | |
| Trocknungs-Druck | 0,33 mbar | 0,9 mbar |
| Trocknungs-Zeit | ca. 6,5 h | ca. 4,5 h |

**Tabelle 3**

| Kaffeesorte C | | |
|---|---|---|
| Parameter | Granulat | Pellets |
| Extrakt - Festst.Gehalt | 42 Gew./Vol% | 42 Gew./Vol.% |
| | ± 1 Gew./Vol.% | ± 1 Gew./Vol.% |
| Extrakt-Temperatur | + 10°C | + 10°C |
| Schaum-Dichte | ca. 840 g/l | ca. 650 g/l |
| Schaum-Temperatur | ca. -5,5°C | ca. -3,5°C |
| Einfrier-Zeit | 25 bis 30 min. | ca. 2 min. |
| Einfrier-Temperatur | auf -45°C | auf -30 bis -40°C |
| Mahl-Temperatur | -40 bis -50°C | entfällt |
| Feinanteil | 25 bis 30% | nicht meßbar |
| Siebanalyse | 0,5-3,5 mm 100% | |
| | 0,5-1,5 mm 0,1-1,5% | 3 x 6 mm |
| | 0 -1,5 mm 0,1-1,5% | |
| Trocknungs-Druck | 0,36 mbar | 1,1 mbar |
| Trocknungs-Zeit | ca. 6,5 h | ca. 4 h |

Die Tabellen zeigen, daß mit dem erfindungsgemäßen Verfahren eine wesentliche Einsparung von Zeit und Energie bei gleichzeitig verbessertem Aussehen des Produktes möglich ist.

## Patentansprüche

1. Verfahren zum Gefriertrocknen von Kaffee-Extrakt, bei dem man
a) Kaffee-Extrakt mit einem Trockenstoffgehalt von 35 bis 45 Gew./Vol.% bis zu einem Schaumgewicht von 450 bis 750 g/l aufschäumt,
b) den aufgeschäumten Kaffee-Extrakt zur Bildung von Pellets auf ein gekühltes Band tropft und die Pellets auf dem Band auf Temperaturen unterhalb -30°C einfriert, und
c) die eingefrorenen Pellets bei Drücken im Bereich von 0,8 bis 1,5 mbar trocknet.

2. Verfahren nach Anspruch 1, bei dem die Schaumtemperatur in Stufe b) am Ende des Aufschäum-Vorganges -2 bis -4°C beträgt.

3. Verfahren nach den Ansprüchen 1 oder 2, bei dem man in Stufe b) den aufgeschäumten Kaffee-Extrakt jeweils in einer solchen Menge auf das gekühlte Band auftropft, daß Pellets mit einem Durchmesser von 4 bis 7 mm und mit einer Höhe von etwa 2.5 bis 3.5 mm entstehen.

4. Verfahren nach den Ansprüchen 1 bis 3, bei dem man die Pellets in Stufe b) 2 bis 3 Minuten lang auf Temperaturen zwischen -30 und -40°C einfriert.

5. Verfahren nach den Ansprüchen 1 bis 4, bei dem man die Pellets in Stufe c) bis zu einer Dichte von 150 bis 300 g/l gefriertrocknet.

6. Verfahren nach den Ansprüchen 1 bis 5, bei dem man die Gefriertrocknung in Stufe c) während der gesamten Trocknungszeit bei Drücken im Bereich von 0,8 bis 1,5 mbar durchführt.

7. Verfahren nach den Ansprüchen 1 bis 5, bei dem man die Gefriertrocknung in Stufe c) nur während einer Phase von 10-50% der Gesamt-Trocknungszeit bei Drücken im Bereich von 0,8 bis 1,5 mbar durchführt und während der verbleibenden Trocknungszeit niedrigere Drücke verwendet.

8. Verfahren nach den Ansprüchen 1 bis 5, bei dem man die Gefriertrocknung in Stufe c) nur während 0,5 bis 2 Stunden bei Drücken im Bereich von 0,8 bis 1,5 mbar durchführt und während der verbleibenden Trocknungszeit niedrigere Drücke verwendet.

## Claims

1. Process for freeze-drying coffee extract, characterized in that
a) coffee extract with a dry substance content of 35 to 45 wt/vol.% is foamed to a foam weight or 450 to 750 g/l,
b) the foamed coffee extract is dropped onto a cooled belt for the formation of pellets and the pellets are frozen on the belt to temperatures below -30°C, and
c) the frozen pellets are dried at pressures in the range of 0.8 to 1.5 mbar.

2. Process according to Claim 1, characterized in that the foam temperature in stage b) at the end of the foaming process is -2 to -4°C.

3. Process according to Claim 1 or 2, characterized in that in stage b) the foamed coffee extract is dropped onto the cooled belt in each case in a quantity such that pellets with a diameter of 4 to 7 mm and with a height of approximately 2.5 to 3.5 mm form.

4. Process according to Claims 1 to 3, characterized in that the pellets in stage b) are frozen for 2 to 3 minutes to temperatures between -30 and -40°C.

5. Process according to Claims 1 to 4, characterized in that the pellets in stage c) are freeze-dried to a density of 150 to 300 g/l.

6. Process according to Claims 1 to 5, characterized in that the freeze drying in stage c) is carried out at pressures in the range from 0.8 to 1.5 mbar during the total drying time.

7. Process according to Claims 1 to 5, characterized in that the freeze drying in stage c) is carried out at pressures in the range from 0.8 to 1.5 mbar only during a phase of 10-50% of the total drying time and lower pressures are used for the remaining drying time.

8. Process according to Claims 1 to 5, characterized in that the freeze drying in stage c) is carried out at pressures in the range from 0.8 to 1.5 mbar for only 0.5 to 2 hours and lower pressures are used for the remaining drying time.

## Revendications

1. Procédé de lyophilisation d'extrait de café, dans lequel :
a) on fait mousser de l'extrait de café avec une teneur en matière sèche de 35 à 45 % en poids/en volume jusqu'à obtenir un poids de mousse de 450 à 750 g/l ;
b) afin de former des pellets, on laisse tomber goutte à goutte l'extrait de café moussé sur une bande réfrigérée et on congèle les pellets sur la bande à des températures inférieures à -30 °C ; et
c) on sèche les pellets congelés sous des pressions allant de 0,8 à 1,5 mbar.

2. Procédé selon la revendication 1, dans lequel la température de moussage à la fin de l'opération de moussage de l'étape b) est de -2 à -4 °C.

3. Procédé selon la revendication 1 ou la revendication 2, dans lequel, à l'étape b), on laisse tomber goutte à goutte l'extrait de café moussé sur la bande réfrigérée en une quantité telle que l'on obtient des pellets de 4 à 7 mm de diamètre et de 2,5 à 3,5 mm de hauteur environ.

4. Procédé selon les revendications 1 à 3, dans lequel, à l'étape b), on congèle les pellets pendant 2 à 3 minutes à des températures allant de -30 à -40 °C.

5. Procédé selon les revendications 1 à 4, dans lequel, à l'étape c), on lyophilise les pellets jusqu'à une densité de 150 à 300 g/l.

6. Procédé selon les revendications 1 à 5, dans lequel, à l'étape c), on effectue la lyophilisation pendant la totalité du temps de séchage sous des pressions allant de 0,8 à 1,5 mbar.

7. Procédé selon les revendications 1 à 5, dans lequel, à l'étape c), on effectue la lyophilisation pendant une phase de 10 à 50 % du temps de séchage total sous des pressions allant de 0,8 à 1,5 mbar et, pendant le restant du temps de séchage, on utilise des pressions inférieures.

8. Procédé selon les revendications 1 à 5, dans lequel, à l'étape c), on effectue la lyophilisation pendant seulement 0,5 à 2 heures sous des pressions allant de 0,8 à 1,5 mbar et, pendant le restant du temps de séchage, on utilise des pressions inférieures.
